# EUROPEAN PATENT APPLICATION

(11) **EP 1 955 981 A2**
(43) Date of publication of application: **13.08.2008**
(21) Application number: 07466019.2
(22) Date of filing: 14.09.2007
(51) Int. Cl.: C02F 11/06, C02F 103/26, C02F 103/32

(54) **Method of energy appreciation of the products from purification of stillage from ethanol production and the equipment for implementation of this method**

(30) Priority: 29.09.2006 CZ 20060617
(71) Applicant: Prokop Invest, a.s., 533 01 Pardubice (CZ); Hydrotech s.r.o., 60200 Brno (CZ); Westfalia Separator CZ s.r.o., 10100 Praha 10 (CZ); CKD Praha DIZ a.s., 19002 Praha 9 (CZ)
(72) Inventor: Procházka, Zdenék, Ing., 152 00 Praha 5 - Slivenec (CZ); Preisler, Jan, Ing., 120 00 Praha 2 (CZ); Bocan, Peter, Ing., 831 07 Bratislava - Vajnory (SK); Slabý, Frantisek, 533 75 Dolní (CZ); Minovský, Josef, 294 77 Meceríz (CZ)
(74) Representative: Havlík, Michal

(57) **Abstract**

The invention relates to the method of exploiting energy from ethanol production stillage purification, the essence of which consists in drying the solid wastes from decanting centrifuge of stillage together with subsequent sediments, in particular the protein sediments from centrifuges for protein sediments dewatering. The liquid part from sedimentation separation of protein sediments then undergoes anaerobic preliminary purification and final aerobic purification, the result of which is producing of a mixture of chemical sediments from precipitation of nitrogenous substances in the form of ammonium magnesium phosphate, anaerobic and aerobic waste sludge and also of chemical sediments from final precipitation of superfluous phosphor to ferric phosphate, which are then, after separation in decanting centrifuges, also dried off together with the previous dewatered stillage and protein sediments to 40-90% dried residue. After drying, this mixture is subjected to combustion with or without producing the granulated pellets in boilers with special regime of spreading the mixture, shifting of the mixture and temperature regime of the boiler while producing medium-pressure or high-pressure steam, which then either serves in the case of the high-pressure steam also for generating of electric power. Furthermore, the solution relates to the equipment for implementation of this method.

## Description

### FIELD OF THE INVENTION

The invention relates to a method of obtaining energy from products of purification of stillage from ethanol production, in which most of energy-rich products are utilised to generate energy, preferably for the needs of the distillery itself. In addition, it relates to the equipment for implementation of this method.

### BACKGROUND OF THE INVENTION

There is a known method for purification of distillers' stillage, where the final products of the process are biogas, dried sediments from stillage with low content of salts, granulated sediments from anaerobic degradation, solid fertilisers on basis of ammonium magnesium phosphate, elementary sulphur, sediments from aerobic final purification, and waste heat from process water. In this method, the raw stillage is deprived of insoluble part and the liquid part is deprived of residual dispersed solids in the secondary separating step, during which process the thickened dense parts from both these steps with low content of salts undergo further processing the result of which is high quality animal feed; upon mixing the liquid parts from both these steps undergo acidification under controlled conditions and are conducted to undergo anaerobic degradation in a reactor with granular biomass consisting of acidification and methanogenic bacteria, from the reactor head is drawn off the biogas which will undergo the process of biological desulphurization whereby elemental sulphur is side-produced, and biogas is drawn off to be utilised as energy source, nitrogenous substances are removed from the liquid part while insoluble ammonium magnesium phosphate is precipitated and the liquid part is then conducted to aerobic final purification, from where, upon separation of sediments, purified water with parameters suitable for releasing into watercourse is drawn off and it is either released or it returns into the process.

In view of the fact that distillery operations are highly energy-intensive, particularly on steam consumption, there is a need to solve the feasibility to produce steam, if possible, from distilleries' own energy sources.

### SUMMARY OF THE INVENTION

The above-mentioned objection has been solved by development of the method according to the invention, by means of which it is possible to cover practically all needs for steam from the energy inherent in the products obtained in the process of disposing of distillers' stillage.

The subject matter of the present invention is therefore the method of exploiting energy from ethanol production stillage purification, the essence of which consists in drying the solid wastes from decanting centrifuge of stillage together with subsequent sediments, in particular the protein sediments from centrifuges for protein sediments dewatering after preceding separation of protein sediments by sedimentation and thickening of the liquid flow from decanting centrifuges of stillage in sedimentation tank with mixing thoroughly the sediment layer, while pH in sedimentation separation of protein sediments is maintained at the values of 5.8 - 13, the liquid part from sedimentation separation of protein sediments then undergoes anaerobic preliminary purification and final aerobic purification, the result of which is producing of a mixture of chemical sediments from precipitation of nitrogenous substances in the form of ammonium magnesium phosphate, anaerobic and aerobic waste sludge and also of chemical sediments from final precipitation of superfluous phosphor to ferric phosphate and sediments from precipitation of poly-phenol and melanoid substances with the use of salts with the content of ions of Al, Pb, Cu, Zn, Fe, the mixed sediments are then, after separation in decanting centrifuges and with or without dosing of auxiliary poly-flocculants, also dried off together with the previous dewatered stillage and protein sediments to 40-90 % dried residue, which enables combustion of this mixture with or without producing the granulated pellets in boilers with special regime of spreading the mixture, shifting of the mixture and temperature regime of the boiler while producing medium- pressure or high-pressure steam, which then either serves in the case of the high-pressure steam also for generating of electric power, during which process medium-pressure steam is generated that is then utilised to meet the energy needs of the distillery, or the directly produced medium-pressure steam that also meets the energy needs of the distillery, which can also be saturated by producing steam from the product of preliminary anaerobic purification, i.e., biogas, which either produces steam in a separate boiler or serves in the start-up statuses to start-up the boilers burning the fuel mixture mentioned above, or the biogas is used to produce electric power on co-generation units which produce the so-called green electric power which then serves the needs of the distillery, or it is conducted to public network.

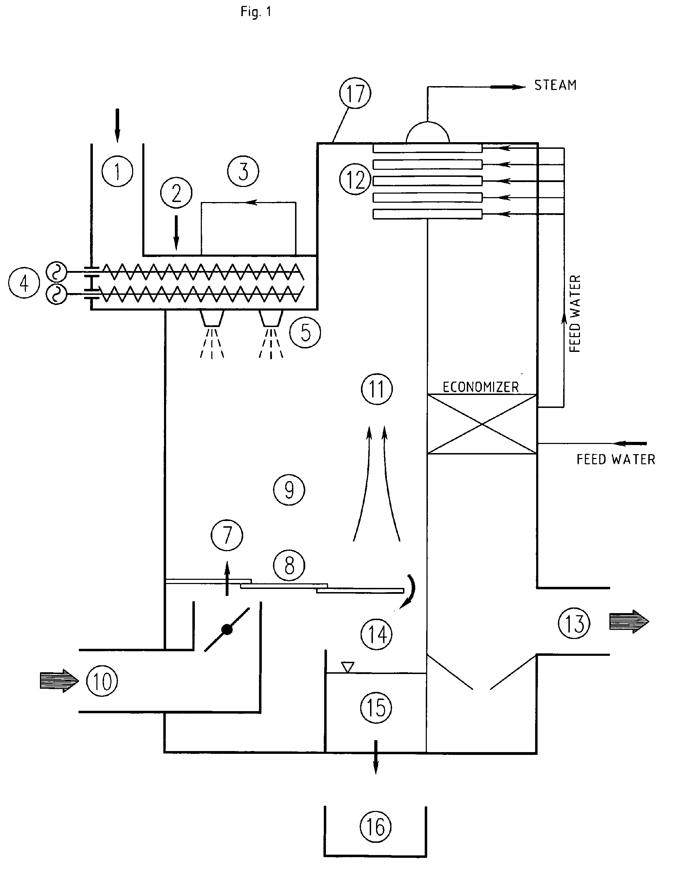

In addition, the subject of the invention is also the equipment to perform the method mentioned, shown in Figure 1. This equipment consists of the units for separation and dewatering of sediments, conveyors of dewatered sediments, and combustion chamber with moving grate, and the essence of it lies in that the input part of the combustion chamber 9 of the boiler 17 for burning of the dried material consists of a set of distribution jets 5 for dosing of the fuel mixture 6 , situated above the front end of the moving grate 8, and under the front end of the moving grate 8 is situated inlet 10 of hot air 7 with regulation fitting, the feed of the fuel mixture 6 is through the distributing jets 5 into a blast of hot air 7 above the front end of the moving grate 8 from the mixing equipment 4 with counter-rotating screws, which is fitted with the inlets 1.2 ... of the fuel components and the recycled material 3, above the moving grate 8 is arranged the combustion gases ducting 11 with a steam exchanger 12 and other boiler draughts 17 ,the duct system 13 with flue exhauster and desulphurization equipment into the chimney and under the grate 8 is situated the outlet of ash 14 via a water seal 15 into the storage container 16.

According to the described method, together with the solid part from the stillage centrifuges is dried also all waste sludge from anaerobic and aerobic parts to the extent that by burning in boiler plant, the production of steam increases and ash from production of steam in boiler plant is the only actual waste from the disposal of stillage.
Together with potential generation of electric power, the distillery becomes self sufficient in producing the energy consumed, particularly medium-pressure steam.

The combustion method is designed so that it is possible to burn loose or granulated dried material from the equipment for distillers' stillage processing. The dried material consists of separated distillers' stillage and sediments from anaerobic and aerobic parts of the equipment for processing of stillage, which are dried again to the required concentration of dried residue in a drier. The equipment is able to produce high-pressure or medium-pressure steam and / or hot water for technological needs of the distillery. It is equipped with the accessories enabling preparation of feed water, dosing of the fuel into the boiler, removal of ash and cinders, treatment of combustion gases and processing of the combustion gases treatment products so that these then may be deposited at a dumping site. It also includes the equipment for electric power supply and its own control system that ensures high degree of the operation automation. Burning of the dried stillage and sediments results in reduced volumes of wastes that must be deposited at dumping sites, the treatment and desulphurization of combustion gases allow to reduce the amount of harmful substances released into the environment, by which means the adverse impacts of distillery operation on the environment are eliminated.

The dried stillage is brought from storage container to the mixing and dosing equipment, which doses the fuel into the combustion chamber according to the requirements for the boiler output. Changing the quantity and the fuel composition is achieved by changing the speed of the shifting and revolution of the parts of the mixing and dosing equipment, which may consist of belt or screw conveyors. The dosing and mixing equipment also enables the partial drying of the fuel prior its entry into combustion chamber. Preparation and conveying of the fuel into boiler is shown schematically in Figure No. 1. The air required for combustion is drawn in from the area of boiler room through effective filters and is let in as primary, secondary and tertiary to appropriate places of the combustion chamber. The combustion chamber is divided into several zones, and the fuel moves through the combustion chamber individual zones on a moving grate, which is either a moving one or it is divided into several independent sections. The fuel on the grate is mixed with air that is simultaneously utilised for cooling of the grate. To cool the grate, a water circuit may be used, too. The final zone is designed as a burn down one, where the un-burned volatile substances not released from the fuel in the preceding zones are burnt up. The spent fuel falls down from the combustion area at the grate end, it cools-down and is taken to the storage container, and from there it is transported to a dumping site.

Combustion gases from combustion chamber flow through one or more draughts into a steam exchanger, where the water is brought to boil. Combustion gases run through the steam exchanger inside a piping system, while water is outside of the piping. The generated saturated steam is deprived of water droplets and conducted to a distributor and from there to the demand sites. At the stream of combustion gases exit from the boiler is introduced an economizer - exchanger, in which the feed water is preheated before it enters the steam exchanger. The economizer cools the combustion gases and so increases the boiler efficiency. After the boiler, combustion gases pass through desulphurization equipment, where the sulphur oxides content is decreased to the required concentration. Desulphurization of combustion gases is carried out by a wet or dry process by dosing ground limestone or lime slurry into the stream of combustion gases. The formed gypsum is separated from combustion gases and collected in a container. When the wet desulphurization process is used, the gypsum is dried to make the handling easier. Gypsum is deposited at dumping sites as stable product not containing any hazardous substances. Desulphurized combustion gases are diverted into the chimney and released into atmosphere. When the dry desulphurization method is used, the products of reactions are trapped on a filter, which is inserted before the inlet into the chimney.

Circulating condensate from the distillery technological process is collected in condensate header tank. Condensate is mixed with treated water from chemical treatment plant, which compensates for the losses of steam and condensate at demand sites and piping routes. The circulating condensate and topping-up water mixture is pumped over exchanger into de-aerator and into feed tank. Water is warmed up by steam before being de-aerated in de-aerator. The required chemicals are dosed into the de-aerated feed water, and the feed water is pumped through the economizer into the steam exchanger.

The equipment is provided with its own control system that monitors the required operational parameters (temperatures, pressures, levels, through-flows, etc.) and controls supply of fuel and feed water, and steam output from the boiler. The boiler is fitted with all prescribed fixtures and elements that allow unattended operation. This allows limiting the presence of service personnel only to the times of the start-up and shutdown. Within the period of permanent steady operation, only the daily inspection rounds to check the operation of the boiler are required.

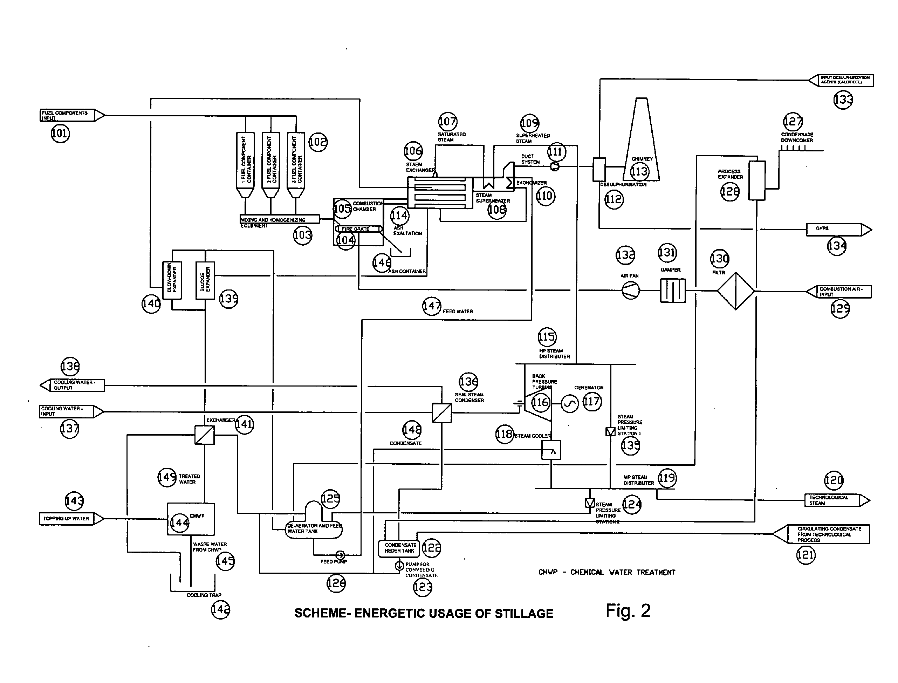

The way of burning the products of the distillers' stillage purification can be illustrated by means of the equipment that is schematically shown in Figure 2.

Dried stillage or other components of fuel 101 are collected in containers of the fuel components 102. Fuel is made by mixing the components in the mixing and homogenizing member 103, which doses the fuel on grate 104 of the combustion chamber 105 according to the requirements for the current output of the boiler. Changing the fuel quantity and composition is achieved by changing the speed of the motion and revolutions of the parts of the mixing and dosing equipment 103, which may consists of belt or screw conveyors. The mixing and dosing equipment 103 also enables partial drying of the fuel prior its entry into combustion chamber 105. Schematic diagram of preparation and entry of the fuel into the boiler is shown in Figure 1.

The air required for combustion 129 is drawn in through effective filters 130 and dampers 131 and is conducted as primary, secondary and tertiary into appropriate places of the combustion chamber 105. The combustion chamber 105 is divided into several zones, and the fuel moves through individual zones on a moving grate 104, which may be divided into several independent sections. The fuel on the grate 104 is mixed with the air 129, which is simultaneously utilised for cooling of the grate 104. In combustion chamber 105, the fuel is burned gradually, including the volatile constituents.

The spent fuel falls down from the combustion space at the end of the grate 104 into a water seal, cools down, and by means of the conveying device 114, it is carried into the container 146, from where it is transported to the dumping site.

Combustion gases from combustion chamber flow through one or more of the steam exchanger 106. In the exchanger 106, water is brought to boil and saturated steam 107 is produced. Combustion gases pass through the steam exchanger 106 inside piping system, while the water is outside the piping. The produced saturated steam 107 is deprived of water droplets and may be used directly as technological steam for the distillery technology. In that case, it is conducted directly into the medium-pressure steam distributor 119 and from there into technology 120 and through pressure limiting station 124 to the de-aerator and feed water tank 125.

The energy of combustion gases can also be used to produce high-pressure steam. In that case, saturated steam 107 is conducted to steam superheater 108, where the required final temperature of high-pressure steam is reached. Superheated steam 109 is then conducted to the high-pressure steam distributor 115 and from there into a steam back-pressure turbine 116. The steam turbine 116 drives the generator 117, which produces electric power that may be used for the consumption of the distillery itself, or sold into public network as ecological electric power, as it has been generated by utilising the energy from biomass.

In passing through the steam turbine, the steam pressure drops to the level of medium-pressure steam suitable for the distillery's technological purposes. Prior to entry into the medium-pressure steam distributor, it is also necessary to reduce the steam temperature to the required value in the steam cooler 118. The temperature reduction is achieved by feeding condensate 148 into steam blast. Further utilisation of steam is the same as in the case of production of saturated steam (107). Between the high-pressure steam distributor 115 and the distributor of medium-pressure steam 119 is introduced the pressure limiting station 135, which serves to lower the steam pressure in the cases of the steam turbine 116 being out of operation.

In the flow of combustion gases at the exit from boiler is inserted the economizer 110 - exchanger, in which the feed water 147 is warmed up prior entering the steam exchanger 104. The economizer 110 cools the combustion gases and by doing so, it increases the boiler efficiency. After the boiler, combustion gases are drawn through duct system with flue exhauster 111 and conducted to chimney 113. Before entering the chimney 113, combustion gases pass through desulphurization equipment 112, where the content of sulphur oxides is decreased to the required concentration. Desulphurization of combustion gases is done by wet or dry method by dosing ground limestone or lime slurry into (133) into a stream of combustion gases. The formed gypsum 134 is separated from combustion gases and collected in a container. When the wet desulphurization process is applied, gypsum 134 is dried to make the handling easier. Gypsum 134 is deposited at dumping sites as stable product that contains no hazardous substances. De-sulphurized combustion gases are diverted into the chimney 113 and released into atmosphere.

Circulating condensate 121 from technological process of the distillery is collected in condensate header tank 122. Condensate is mixed with treated water 149 from chemical water treatment plant 144, which compensates the losses of steam and condensate at demand sites and piping routes with topping-up water 143 from the sources outside the boiler room. Before its further use, topping-up water 149 is warmed up in exchanger 141. The mixture of circulating condensate 121 and treated topping-up water 149 is pumped over into de-aerator 125 and into a feed tank. For de-aeration in de-aerator 125, water is warmed up with the steam from the limiting station 124. The required chemicals are dosed into de-aerated feed water and the feed water is then pumped by the pump 126 through the economizer 110 into steam exchanger 106.

The boiler room accessories include a process expander 128, which collects the condensates formed during operation of the boiler and steam turbine, and expanders of sludge 139 and continuous blow-down water 140, which serve to take the salts from the exchanger 106 into cooling trap 142. In addition, part of accessories is the seal steam condenser 136, in which takes place the condensation of the steam from seals of steam turbine 116. The condenser of seal steam 136 is cooled by cooling water 137, 138 from external cooling circuit.

The equipment for burning of stillage is equipped with its own control system which monitors and controls the boiler and steam turbine operation, solves operational and emergency conditions, and protects the equipment against damage.

Besides ethanol, a bio-distillery with the consumption of 837 t of wheat per day is in the end able to produce:
- 60 to 90 t of medium-pressure steam (0.9 to 2.0 MPa)/h from burning of the dried material of 40 to 90 % dry weight and produced biogas,
   or
- 50 to 77 t of high-pressure steam (2.0 to 6.0 MPa)/h from burning of the dried material of 40 to 90 % dry weight and produced biogas with change-over to medium-pressure steam with simultaneous production of 80 000 to 190 000 kWh/day of electric power on a back-pressure turbine, or
- 50 to 80 t of medium-pressure steam/h of 40 to 90 % dry weight, with simultaneous production of 40 000 to 80 000 kWh/day of electric power from cogeneration utilising the produced biogas,
- 5 to 15 t of granulated anaerobic sediments/day of 10 % dry weight for the needs of wastewater treatment plants
- 0.4 - 2.0 t of elemental sulphur /day with the purity of up to 96 %,
- 80 000 to 200 000 kWh/day of heat in the form of 80 °C hot water and
- 5 to 20 t aerobic sediments/day in the form of 20 % dry weight.

### EXAMPLES

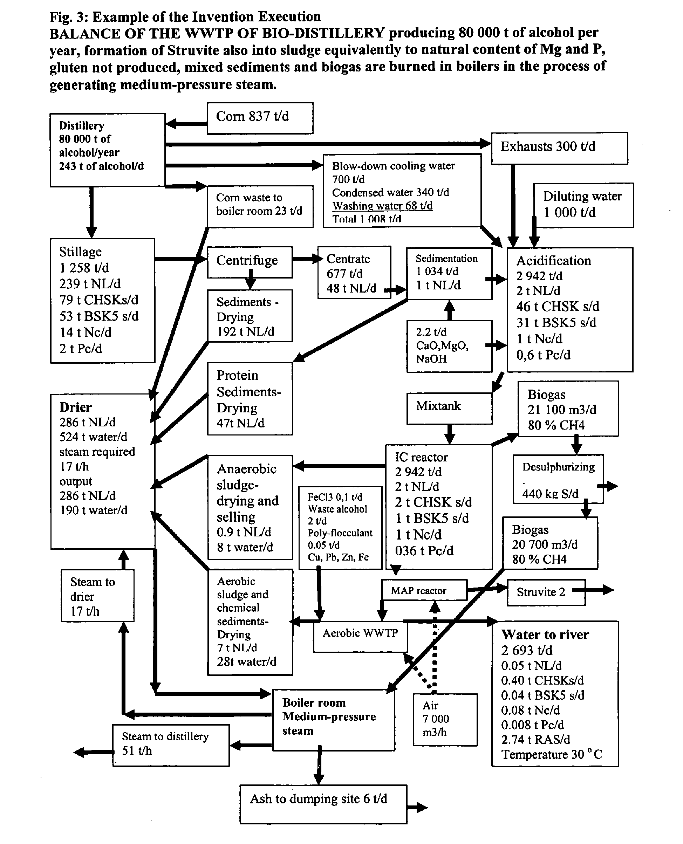

The invention is illustrated in more details on basis of an example, which is elaborated by means of a diagram indicating the through-flows and composition of individual streams. The diagram is enclosed as Figure 3. The abbreviations used in the diagram have the following meanings:

### Abbreviation Meaning

- NL: Undissolved matters
- N_{c}: Nitrogen total
- P_{c}: Phosphorus total
- SO₄: Sulphates
- PO₄: Phosphates
- a.s.: Absolute dry matter
- H2S: Hydrogen sulphide
- CH4: Methane
- CO2: Carbon dioxide
- FeC13: Ferric chloride
- RAS: Dissolved inorganic salts
- T- COD: Total chemical oxygen demand bi-chromate
- S-COD: Dissolved phase of chemical oxygen demand bichromate
- T-BOD: Total biochemical oxygen demand five-day
- S-BOD: Dissolved phase of biochemical oxygen demand five-day
- MAP: Magnesium ammonium phosphate
- GJ: Giga joule
- CaO: Calcium oxide
- Na: Sodium
- MJ: Mega joule
- MgO: Magnesium oxide
- Cl: Chlorides

It is obvious from the diagram provided, that by the method of obtaining energy from the stillage from the production of ethanol, that is from waste material that must usually be disposed of in a complicated way, according to the invention it is possible to achieve practically a complete energy self-sufficiency of the entire distillery, which then need not depend on energy sources supplied externally.

## Claims

1. The method of energy appreciation of the products from purification of stillage from production of ethanol, **characterised in that** the solid wastes from decanting centrifuge of stillage together with subsequent sediments, in particular the protein sediments from centrifuges for protein sediments dewatering after preceding separation of protein sediments by sedimentation and thickening of the liquid flow from decanting centrifuges of stillage in sedimentation tank with mixing thoroughly the sediment layer, while pH in sedimentation separation of protein sediments is maintained at the values of 5.8 - 13, the liquid part from sedimentation separation of protein sediments then undergoes anaerobic preliminary purification and final aerobic purification, the result of which is producing of a mixture of chemical sediments from precipitation of nitrogenous substances in the form of ammonium magnesium phosphate, anaerobic and aerobic waste sludge and also of chemical sediments from final precipitation of superfluous phosphor to ferric phosphate and sediments from precipitation of poly-phenol and melanoid substances with the use of salts with the content of ions of Al, Pb, Cu, Zn, Fe, the mixed sediments are then, after separation in decanting centrifuges and with or without dosing of auxiliary poly-flocculants, also dried off together with the previous dewatered stillage and protein sediments to 40-90% dried residue, which enables combustion of this mixture with or without producing the granulated pellets in boilers with special regime of spreading the mixture, shifting of the mixture and temperature regime of the boiler while producing medium-pressure or high-pressure steam, which then either serves in the case of the high-pressure steam also for generating of electric power, during which process medium-pressure steam is generated that is then utilised to meet the energy requirements of the distillery, or the directly produced medium-pressure steam that also meets the energy requirements of the distillery, which can also be saturated by producing steam from the product of preliminary anaerobic purification, i.e., biogas, which either produces steam in a separate boiler or it serves in the start-up statuses to start-up the boilers burning the fuel mixture mentioned above, or the biogas is used to produce electric power on co-generation units which produce the so-called green electric power which then serves the needs of the distillery, or it is conducted to public network.

2. The equipment to implement the method according to claim **1**, consisting of the units for separation and dewatering of sediments, conveyors of dewatered sediments, and combustion chamber with moving grate, **characterised in that** the input part of the combustion chamber (9) of the boiler (17) for burning of the dried material consists of a set of distribution jets (5) for dosing of the fuel mixture (6), situated above the front end of the moving grate (8), and under the front end of the moving grate (8) is situated inlet (10) of hot air (7) with regulation fitting, the feed of the fuel mixture (6) is through the distributing jets (5) into a blast of hot air (7) above the front end of the moving grate (8) from the mixing equipment (4) with counter-rotating screws, which is fitted with the inlets (1,2 ...) of the fuel components and the recycled material (3), above the moving grate (8) is arranged the combustion gases ducting (11) with a steam exchanger (12) and other boiler draughts (17),the duct system (13) with flue exhauster and desulphurization equipment into the chimney and under the grate(8) is situated the outlet of ash (14) via a water seal (15) into the storage container (16).
